# EUROPEAN PATENT APPLICATION

(11) **EP 2 584 485 A1**
(43) Date of publication of application: **24.04.2013**
(21) Application number: 11306363.0
(22) Date of filing: 21.10.2011
(51) Int. Cl.: G06F 21/00

(54) **Method, device and system for entering data**

(71) Applicant: Gemalto SA, 92190 Meudon (FR)
(72) Inventor: Gauteron, Laurent, 13700 Marignane (FR); Volpe, Sébastien, 13700 MARIGNANE (FR)

(57) **Abstract**

The invention relates to a method 20 for entering data, data to be entered comprising at least one digit.

According to the invention, at least one digit being associated with no touch or a count of at least one touch, the method comprises the following steps. A first device detects 210 a count of at least one touch that is or is not present at once or several times. The first or a second device determines 220 the digit associated with no detected touch or a detected count of at least one touch, the second device being connected to the first device.

The invention also relates to corresponding device and system.

## Description

### Field of the invention:

The invention relates, in a general manner, to a method for entering data. Moreover, the invention also pertains to a device for entering data.

Finally, the invention generally relates to a system for entering data.

### State of the art:

GB 2 454 459 A describes a known solution for entering a Personal Idenfication Number (or PIN) (code), as data. Such a solution is based on a use of a grid of boxes symbolizing corresponding keys on a touch screen. Each box presents a number comprised between zero and nine in a random manner while ensuring that all the numbers are present within the grid. A user types in a PIN by pressing on the grid on a dedicated touch screen key, so as to enter each number that is comprised within the PIN.

However, such a known solution presents a risk that a malicious person steals by observing each number pressed on the grid and comprised within the entered PIN.

There is therefore a need to secure, in a more efficient manner, an entry of data, such as a PIN.

### Summary of the invention:

The invention proposes a solution for satisfying the just herein above specified need by providing a method for entering data. Data to be entered comprises at least one digit.

According to the invention, at least one digit being associated with no touch or a count of at least one touch, the method comprises the following steps. A first device detects a count of at least one touch that is or is not present at once or several times. The first or a second device determines the digit associated with no detected touch or a detected count of at least one touch. The second device is connected to the first device.

The principle of the invention consists in assigning a number of possible touch(es) to one digit to be input either simultaneously or successively, identifying by a first device a number of touch(es), if any, and recognizing the corresponding assigned digit by either the first or a second device connected to the first device.

It is to be noted that a user who desires to enter a digit does not have to press on a dedicated key or button of a virtual or physical keyboard.

Contrary to the herein above described known solution, an entry of a digit may be independent of any corresponding associated key. Such a solution is user friendly since the user does not have to detect visually where a key associated with a desired digit to be entered is before pressing on it. The user has just to think about a number of possible touch(es) associated with a digit to be entered. The association between a number of possible touch(es) and a corresponding digit to be entered may be direct and natural, i.e. there is no need to look for a dedicated key assigned to the digit.

The entry of a digit may be carried out in a blind way or with a user terminal whose Man Machine Interface (or MMI) does not need to be lit. Such a non-lit MMI allows saving power.

The invention solution makes it possible to enter a digit in a secure manner since even if there is a malicious person that spies a user who is entering a digit, it is difficult for her(him) to feel how many touch(es), if any, has(have) been carried out by the user.

Preferably, the first device comprises at least one touch surface. Thus, a user may use one or several fingers of one or two hands to contact one or several touch screens and/or one or several touch pads depending on the first device.

According to a further aspect, the invention is a device for entering data. Data to be entered comprises at least one digit,

According to the invention, at least one digit being associated with no touch or a count of at least one touch, a first device is adapted to detect a count of at least one touch that is or is not present at once or several times, and determine the digit associated with no detected touch or a detected count of at least one touch.

As device, it may be either a (user) terminal, like a Personal Computer (or PC), a mobile telephone, a Personal Digital Assistant (or PDA), a palm-top computer, a laptop computer, a netbook, a tablet computer, a game console, or a smart object, like an embedded chip, i.e. a chip soldered to a Printed Circuit Board (or PCB) of a terminal, a removable smart object, like a Subscriber Identity Module (or SIM) type card or a smart dongle.

According still to a further aspect, the invention is a system for entering data. Data to be entered comprises at least one digit.

According to the invention, the system comprises a first device and a second device connected to the first device. At least one digit being associated with no touch or a count of at least one touch, a first device is adapted to detect a count of at least one touch that is or is not present at once or several times, and the second device is adapted to determine the digit associated with no detected touch or a detected count of at least one touch.

As first device, it may be a terminal, like a PC, a mobile telephone, a PDA, a palm-top computer, a laptop computer, a netbook, a tablet computer, a game console, a portable PC, a portable TeleVision (or TV) and/or any other computer device.

As second device, it may be a smart object (or termed token), like an embedded chip, i.e. a chip soldered to a PCB of a terminal, a removable smart object, like a SIM type card or a smart dongle that is coupled to the first device.

### Brief description of the drawings:

Additional features and advantages of the invention will be more clearly understandable after reading a detailed description of one preferred embodiment of the invention, given as an indicative and non-limitative example, in conjunction with the following drawings:
- Figure 1 represents a simplified diagram of one exemplary embodiment of a system for entering data, the system comprising a mobile telephone, as first device, and a card with a chip, as second device, the system being adapted to associate a count of possible touch(es) with a digit to be entered, according to the invention; and
- Figure 2 illustrates a flow chart of an exemplifying method for entering a PIN involving messages exchanged between the mobile telephone and the chip of figure 1.

### Detailed description:

Herein under is considered a case in which the invention method for entering data is implemented by a mobile telephone, as user terminal, in cooperation with a smart card, as token or smart object.

However, it is only for exemplifying purposes and is not considered to reduce the scope of the present invention.

The invention method for entering data may be implemented by a user terminal on its own, i.e. without cooperating with any other device.

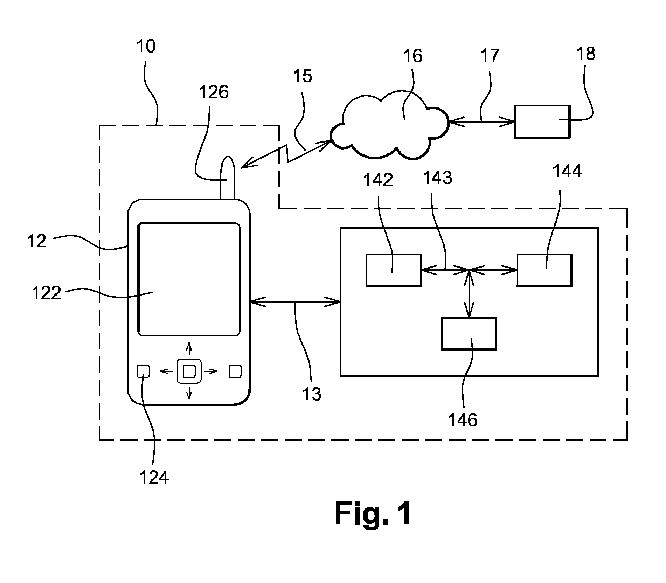

Figure 1 shows a system 10 for entering data.

The system 10, as a mobile equipment assembly, comprises a mobile telephone 12, as a user device, and a card (not represented) including a chip 14 that is coupled to the mobile telephone 12, in order to cooperate with each other.

For simplicity, the mobile telephone 12 and the chip 14 of the card are termed hereinafter respectively the phone 12 and the chip 14.

The card, as token, may be inserted within the phone 12.

The card may be a Subscriber Identity Module (or SIM) type smart card.

The SIM type smart card can be, for instance, a Universal Integrated Circuit Card (or UICC) in GSM (acronym for "Global System for Mobile communications") and UMTS (acronym for "Universal Mobile Telecommunication System") networks, a SIM smart card for a GSM network, a Universal Subscriber Identity Module (or USIM) for a UMTS network, a Removable User Identity Module (or RUIM) and/or a Code Division Multiple Access (or CDMA) Subscriber Identity module (or CSIM) for a CDMA network and/or an Internet protocol Multimedia Subsystem (or IMS) Subscriber Identity Module (or ISIM) application for an IMS network. Naturally, the just aforementioned list is not exhaustive.

For example, instead of being constituted by a SIM type smart card, the token is constituted by a smart USB dongle, a mass-storage card, like a MMC (acronym for "MultiMediaCard"), a SD (acronym for "Secure Digital") card, and/or any other electronic medium that may have different form factors. The token may also be a chip to be fixed, possibly in a removable manner, to a host computer, or a chip to be soldered within a host computer, as terminal.

The phone 12 is provided with at least one touch surface or interface that is sensitive to one or several contacts with, for example, one or several pens and/or one or several phone user fingers of one or two hands. Data to be entered, like, comprises at least one digit.

The user enters, through a phone Man Machine Interface (or MMI), data, such as a PIN, a One Time Password (or OTP), a user password and/or a passphrase.

The phone 12 is preferably equipped with a touch display screen 122, as touch sensitive interface or touch sensitive surface.

According to another embodiment, the phone is equipped with one (or several) touch pad(s).

According to still another embodiment, the phone has at least one touch display screen and at least one touch pad.

The touch display screen 122 comprises at least one contact area that is sensitive to one or several physical contacts.

The touch display screen 122 may be provided with a light source(s) or emitter(s), so as to light the touch display screen 122 and ease a user reading of data thus displayed.

The phone 12 has one or several physical buttons or keys 124.

One key may be dedicated to powering up or down the phone 12.

One key may be dedicated to selecting one item amongst several items displayed on the touch display screen 122.

One key may be dedicated to moving a pointer displayed on the touch display screen 122 to one or several directions to up, down, left and/or right with respect to a location of the displayed pointer.

The phone 12 includes, as data processing means, at least one microprocessor (not represented), volatile and non-volatile memories (not represented), at least one Input/Output (or I/O) interface (not represented) linked together through a data and control bus (not represented).

The I/O interface(s) comprise(s) a contact interface (not represented) of the type ISO (acronym for « International Standard Organization ») 7816, as one I/O interface, to interact with the chip 14. The contact interface is intended to let communicate, through a bi-directional link 13, the phone 12 with the chip 14.

The phone 12 is adapted to communicate data with the chip 14 by using Application Protocol Data Unit (or APDU).

Instead of the contact interface, the chip 14 and the phone 12 are coupled to each other, through a short range radiofrequency link, as contact-less interface, such as a Bluetooth (registered trademark), a Wifi (registered trademark), or a Near Field Communication (or NFC) that allows exchanging data typically up to 20 cm between the phone 12 and the chip 14 for NFC.

The phone 12 has an antenna 126, as another I/O interface, to communicate, Over The Air (or OTA), via a long range radiofrequency bi-directional link 15, through a cellular telecommunication network 16, with a (remote) (network) server 18.

The cellular telecommunication network 16 is connected, for instance, through a cable, via a bi-directional link 17, to the server 18. The cellular telecommunication network 16 is adapted to implement at least one communication mode, such as a 2G (acronym for a second generation network, i.e. GSM), 3G (acronym for a third generation network, i.e. UMTS") and/or CDMA communication mode(s).

The cellular telecommunication network 16 may be constituted by a GSM, a UMTS, a CDMA and/or a Long Term Evolution (or LTE) type network(s). Such a network list is not exhaustive but only for exemplifying purposes.

The phone 12 has preferably the capacity to communicate with the server 18.

The server 18 is integrated within an entity of a system that can be constituted by the system usually known as a back-end OTA system. The server 18 is operated by either a mobile radio-communication network operator or on its behalf, a bank operator and/or a service provider or on its behalf.

The server 18 to be addressed is preferably identified within data stored by the chip 14. The server 18 may be identified by an Uniform Resource Identifier (or URI), like an Uniform Resource Locator (or URL), as server identifier.

The server 18 is hosted by a computer. The server 18 may be dedicated to running an application(s) for managing application data.

To interact with the user, the phone 12 has the capacity to implement a SIM ToolKit (or STK) mechanism by which the chip 14 acts as a master while the phone 12 acts as a slave.

The phone 12 is preferably able to interpret any proactive command originating from the chip 14 involving, for instance, a user operation, such as "Display text", "Getinkey", and/or "Get-input".

The phone memories store data notably relating to an Operating System (or OS) and applications supported by the phone 12.

The phone memories also store data relating to a count or number of one or several touches or contacts on a touch sensitive surface(s), like the touch display screen 122, as soon as detected and data relating to a detected count of touch(es), like one corresponding command for each digit to be identified. All the commands may be one and the same for all the detected touch counts while modifying a value of its parameters, namely the one corresponding to a touch count value.

The phone microprocessor processes and controls data within the phone 12 and/or data to be exchanged with outside of the phone 12. The phone microprocessor controls and communicates with all the components of the phone 12, such as the I/O interfaces.

According to one feature of the invention, the phone 12 is adapted to detect a count of one or several touches, if any, i.e. when present. The phone 12 may be adapted to determine a digit associated with no detected touch count. The phone 12 is adapted to compare a detected touch count and/or no detected touch count with a list of predefined stored touch counts. As soon as the phone 12 identifies within the list the possibly detected touch count and associates data relating to the possibly detected count of touch(es), like a command for entering one digit, and sends this latter to the chip 14.

According to one preferred embodiment, the touch(es) to be detected, when present, is(are) carried out on the touch display screen 122, as one touch sensitive interface.

Alternately, the touch(es) to be detected, when present, is(are) carried out on physical keys comprised within a keyboard 126. According to such other embodiment, the key(s) that may be used for such a detection is(are) either any key of the keyboard, i.e. in an independent manner of the symbol, letter, number, action displayed by the considered key(s), or one predefined key(s).

Alternatively, the touch(es) to be detected, when present, is(are) carried out on at least one physical key comprised within one keyboard(s) and on at least one touch sensitive interface.

Whatever the embodiment, be it with one touch sensitive interface(s) and/or one physical key(s) comprised within one keyboard(s), the touch(es) to be detected, when present, may be carried out at one and the same time or several times, i.e. in a consecutive manner.

The touch(es) may be carried out on the touch display screen 122 either independently of any virtual key or on at least one predefined virtual key(s) that is(are) displayed on the touch display screen 122.

Advantageously, when the touch(es) is(are) carried out with one object(s) hold with one or two hands and/or one or several fingers of one or two hands, the invention system 10 constitutes a secure input system. As a matter of fact, the dorsum of each hand allows hiding the touch(es) carried out with one object(s) hold with one or two hands and/or one or several fingers of one or two hands with respect to a possible person who is close to the phone user and tries to spy a data entry.

The phone 12 is preferably provided with a timer. The timer is set to a predefined time period value. The predefined time period value may be provided by the chip 14 or configured by a phone user.

According to one preferred embodiment, the phone 12 is adapted to send to the chip 14, as secure element, data relating to a detected count of touch(es), like a corresponding command.

Instead of interacting with any other external entity, the phone 12, as a standalone computer entity, may be adapted to determine the digit associated with a detected count of at least one touch, if any, i.e when present. Optionally, the phone 12 is able to capture one or several user fingerprints while the user touches the touch display screen 122 with one or several fingers, so as to authenticate the user. To authenticate the user, the phone 12 is adapted to compare at least one user fingerprint with corresponding biometric data that is stored within the phone memories and if the at least one user fingerprint corresponds to biometric data, then the user is authenticated.

The phone 12 communicates with the chip 14, via the bi-directional link 13, through a contact interface of the type ISO 7816.

The chip 14 comprises, as data processing means, at least one microprocessor 142, volatile and non volatile memories 144 and at least one I/O interface 146 linked together through a data and control internal bus 143.

The chip 14, as secure element, plays preferably a role of a safe for the data saved within its memories 144.

The chip I/O interface 146 is used for exchanging data with outside of the chip 14, namely at least the phone 12, or, possibly through the phone 12, the server 18.

The chip memories 144 can be constituted by one or several EEPROMs (acronym for "Electrically Erasable Programmable Read-Only Memory"), one or several ROMs (acronym for "Read Only Memory"), one or several Flash memories, and/or any other memories of different types, like one or several RAMs (acronym for "Random Access Memory").

The chip memories 144 store data relating to an OS and preferably a STK application and/or user data relating to a phone book, contacts and/or messages.

The chip memories 144 store preferably data relating to each touch count to be detected, when present, by the phone 12 and, for each touch count, corresponding associated command to be received by the chip 14.

Each touch count to be detected and corresponding command to be received by the chip 14 may have been loaded either during the personalization of the chip 14 (i.e. preferably at the end of the manufacture process) or downloaded from an external server. Alternately, each touch count to be detected and corresponding command to be received by the chip 14 may have been defined or configured by the user once she/he owns the chip 14 with the help of an host device, such as her/his phone 12.

The chip memories 144 store preferably at least one digit, as a digit set, associated with at least one count of touch, as a touch count set.

The chip memories 144 may store a PIN to be entered by a user to be authenticated.

The chip memories 144 may store credentials and/or a key(s). The credentials can be used for authenticating the user before the server 18 and/or sign data to be sent to outside world, like the server 18, possibly by using data that is received from outside.

The chip memories 144 store data relating to a target application for entering data. The target application may be launched as soon as the chip 14 is powered up or on request of another application supported by the phone 12, the chip 14 or the server 18.

The chip 14 may be able to receive from outside, through the I/O interface 146, a command for triggering an execution of the target application.

The chip microprocessor 142 controls and communicates with all the components of the chip 14.

The chip microprocessor 142 executes preferably security functions, in order to protect access to information, like data stored, to be sent, received and/or managed by the chip 14.

The security functions include a user authentication application to be executed before accessing, in particular, data stored within the chip memories 144.

To authenticate the user, the chip 14 may store an application for verifying a PIN and/or personal biometric data stored securely within the chip 14 and to be input by the chip user by touching the touch display screen 122, as touch sensitive interface. Thus, the chip 14 compares data entered by the chip user with the stored PIN and/or personal biometric data and authorize, when successful, a running of any application supported by the phone 12, the server 18 and/or the chip 14.

The security functions include preferentially an encryption/decryption process to be used before sending data to outside/after receiving data from outside, so as to protect access to the data exchanged with the chip 14. To encrypt data to be sent, the chip 14 uses a key and an encryption algorithm, such as an Advanced Encryption Standard (or AES), a Data Encryption Standard (or DES) or the like, that are both stored within the chip memories 144. To decrypt data to be received, the chip 14 may use a key and a decryption algorithm, such as an AES, a DES or the like, that are both stored within the chip memories 144.

According to the preferred presented embodiment, the chip microprocessor 142 executes the target application by exchanging data with the phone 12, in order to interact, through the phone 12, with its user.

Preferentially, the chip 14 is arranged to provide the phone 12, as host device, with all the predefined touch counts and all corresponding associated commands to be sent by the phone 12 to the chip 14.

According to one preferred embodiment, the chip 14 is adapted to determine the digit associated with a detected count of at least one touch, if any, i.e when present. The chip 14 may be adapted to determine a digit associated with no detected touch count. The detected touch count is to be provided by the phone 12, as entity with MMI.

A lot of embodiments for an association between a detected count of possible touch(es) and a digit to be entered may be implemented.

A default configuration carried out by the chip manufacturer or provider for the association between a detected count of possible touch(es) and a digit to be entered is predetermined and stored, during the chip personalization, within the chip 14.

Alternately, instead of a default configuration, a configuration carried out by the chip user for the association between a detected count of possible touch(es) and a digit to be entered is defined by which the user defines her(his) own association between a detected count of touch(es) and a digit to be entered.

The chip 14 may be further adapted to compare at least one user fingerprint with corresponding biometric data that is stored within the chip memories 144 and if the at least one user fingerprint corresponds to biometric data, then the user is authenticated. The user fingerprint(s) is(are) captured by the phone 12 via the touch sensitive interface(s) and then sent to the chip 14. Otherwise, i.e. if the at least one user fingerprint does not correspond to any stored biometric data, the user is not authenticated. If there are several user fingerprints that are captured in only one sequence, the chip 14 may be further adapted to analyze whether the user fingerprints are distinct from each other, i.e. two by two, so as to detect a fraud attempt when applicable. If at least two user fingerprints are identical and captured in only one sequence, then the chip 14 may undertake at least one action to prevent the true chip user from being attacked by a potential thief. The action(s) may be to cancel any pending execution process and/or erase at least part of data stored within the chip memories 144.

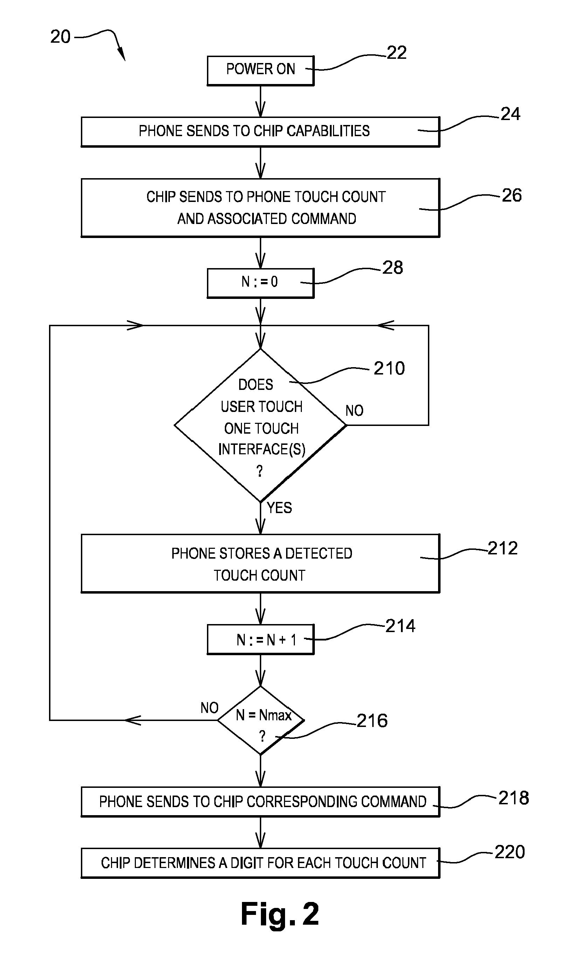

Figure 2 depicts an exemplary embodiment of the invention method 20 for entering a PIN that involves the phone 12 and the chip 14.

This invention method 20 includes different steps that are further described in one embodiment in which a proactive mechanism may be used, so as to let the phone 12 and the chip 14 communicate.

As known per se, the proactive mechanism allows using STK commands initiated by the chip 14, in order to manage at least one STK application involving an execution of an application by the chip 14.

Firstly, the phone 12 and the chip 14 are 22 both powered up.

Then, the phone 12 sends 24 to the chip 14 a message, such as a so-termed "TERMINAL PROFILE", for indicating the phone capabilities, notably in terms of physical phone means, including information about an equipment of the phone 12 comprising one touch display screen 122, and proactive commands that the phone 12 supports (i.e. is able to interpret).

The chip 14 is thus able to interact with the phone 12 while using STK commands supported by the connected phone 12.

It is assumed that the user interacts, through only the phone touch display screen 122, as touch sensitive interface, with the chip 14, so as to enter data to be determined by the chip 14.

According to another embodiment (not represented), the user interacts, through only a keyboard, as touch sensitive interface, with the chip 14.

According to still another embodiment (not represented), the user interacts, through one touch display screen(s) and one keyboard(s), as touch sensitive interfaces, with the chip 14.

During a configuration or set-up phase of the phone 12, the chip 14 transmits 26 to the phone 12 a set of touch counts and a corresponding set of commands for all potential digits to be identified. Each touch count is associated with a particular command that the chip 14 has to receive. When the phone user touches, in only one sequence or in several sequences, the touch display screen 122 with a pen(s), as object(s), and/or a finger(s), the phone 12 detects how many touches the phone user has carried out on the touch display screen 122, retrieves the corresponding command and sends this latter to the chip 14. Such a command retrieval is rendered possible thanks to the association between a touch count (that may be null) and a command that is stored within the phone memories. The chip 14 configures thus the phone 12 by setting parameters relating to a count of possible touch(es) input by the phone user for all digits that may be entered, as configuration data. The phone 12 is therefore able to detect a count of touch(es), when present or not, at once or several times, possibly in a predetermined time period, and inform the chip 14 about such a detected touch count or no detected touch.

Once configured, the phone 12 knows an association of a possibly detected touch count with a corresponding command to be addressed to the chip 14.

Preferably as soon as the chip 14 has received information about a reception of touch count configuration data by the phone 12, the chip 14 launches, in an automatic manner, an execution of the target application supported by the chip 14. Such an execution allows entering, for instance, four digits for a PIN.

The chip 14 is able to associate, thanks to configuration data stored within the chip 14, a digit with a touch count that is detected when present, or not detected (when absent), and informed by the phone 12.

A lot of embodiments for an association that is stored, as configuration data within the chip 14, between a detected count of possible touch(es) and a digit to be entered may be implemented.

For instance, a direct, natural and simple first embodiment of an association between a possibly detected count of touch(es) and a digit to be entered is a count of detected touch(es) corresponds to a digit to be entered namely: zero touch : the digit "zero", one touch : the digit "one", two touches : the digit "two", three touches : the digit "three", four touches : the digit "four", five touches : the digit "five", six touches : the digit "six", seven touches : the digit "seven", eight touches : the digit "eight", nine touches : the digit "nine".

According to a second embodiment, an association between a count of detected touch(es) and a digit to be entered is as follows: ten touches : the digit "zero", one touch : the digit "one", two touches : the digit "two", and so on up to nine touches : the digit "nine" where a value of the count of touch(es) equals a digit value to be associated with the count touch value except for the digit "zero", the touch count value of which is not equal to any touch count value already associated with another digit value.

According to a third embodiment, an association between a count of detected touch(es) and a digit to be entered is as follows: one touch : the digit "zero", two touches : the digit "one", three touches : the digit "two", four touches : the digit "three", five touches : the digit "four", six touches : the digit "five", seven touches : the digit "six", eight touches : the digit "seven", nine touches : the digit "eight", ten touches : the digit "nine" where a value of the count of touch(es) is one unity higher than a digit value to be associated with the value of the count of touch(es).

The chip 14 initializes 28 a counter that registers a value of a count of digit(s) that a phone user has entered.

The chip 14 may request (not represented), through the touch display screen 122, a user to enter at least one digit by sending to the phone 12 a STK command, such as "Display text", with, as command parameter, a message, like "Please enter PIN", to be displayed.

Alternately, the phone 12 requests, through the touch display screen 122, a user through a message, like "Please enter PIN", to be displayed, to prompt her(him) to enter at least one digit.

Preferentially, the chip 14 sends (not represented) to the phone 14 a predefined first time period value, for instance 1 s, during which a user is allowed to touch at least the touch display screen 122.

Alternatively, the phone 12 is pre-configured, during its manufacturing, with or the phone user configures a first time period value during which a user is allowed to touch at least the touch display screen 122.

Thus, a phone user is able to enter a corresponding digit at once or several times during the set first time period.

Then, the phone 12 checks 210 whether the phone user touches with no, one or several contacts (or touches) the touch display screen 122, in one or several sequences for a digit to be entered.

A number of the sequences may be restricted to a maximum value, for instance two, during a configuration of the phone 12 by the chip 14, the phone user or the phone manufacturer.

Each sequence may be limited by a second time period value for a corresponding partial digit entry session. The second time period value may be set by the chip 14, the phone user or the phone manufacturer. The second time period value may be equal to or distinct from the first time period value.

While a phone timer has not reached the set time period value(s), the phone 12 continues to check 210 whether the phone user touches via no, one or several contacts (or touches) the touch display screen 122, in one or several sequences for a digit to be entered.

When applicable (not represented), at the end of the set time period (s), if the phone 12 detects no touch (of any sort) on the touch display screen 12, then the phone 12 stores a corresponding null value of touch count. Such an absence of touch, as null touch count value, may be associated, within the phone memories, with a corresponding command to be addressed to the chip 14.

As soon as the phone 12 detects at least one contact or touch, at once, i.e. at the end of a single sequence, or at several times, i.e. at the end of a second sequence or more, on the touch display screen 122 possibly before an expiration of at least one time period, the phone 12 stores 212 a corresponding (total) count of the detected touch(es).

The detected touch count may be an addition of several partial detected touch counts. Each detected partial touch count is stored at the end of one sequence.

Optionally, the phone 12 sends to the user a signal for indicating to the user that a count touch of at least one touch or no touch has been detected. Such a signal may be visible. For instance, the phone 12 sends to its touch display screen 122 a pop-up message, like a box that contains an additional star "X" for each digit capture session, so as to inform the phone user that a corresponding digit has been captured.

Once the phone 12 has detected a touch count (possibly equal to zero) for a corresponding session of a digit capture, the phone 12 increments 214 the counter with one unity.

Then, the phone 12 verifies 216 whether the counter has reached a predetermined maximum counter value Nmax, like 4.

If the counter value is distinct from the maximum counter value, then the phone 12 reiterates the last three previous steps 210, 212 and 214, so as to register a detected touch count.

Otherwise, i.e. if the counter value is equal to the maximum counter value, while the phone 12 stores as many detected and stored touch counts as the maximum counter value, the phone 12 determines for each stored touch count a command associated with the concerned touch count.

Then, the phone 12 sends 218 to the chip 14 all the commands associated with all the touch counts that the phone 12 has sequentially detected and registered during a capture of the corresponding digits, i.e. the maximum counter value of digits.

One command is preferably associated with each touch count detected and registered. The number of the commands is identical to the number of the touch counts that the phone 12 has successively detected and stored within its memories.

One command may be associated with all the touch counts detected and registered with, for each command, one parameter corresponding to one touch count.

Once the chip 14 has received and interpreted all the command(s) associated with all the touch counts that the phone 12 has successively detected and registered, the chip 14 determines 220 a digit associated with each detected touch count.

Then, the chip 14 retrieves all the corresponding digits that the phone user enters as PIN.

The chip 14 compares (not represented) the entered digits with the PIN stored within the chip memories 144.

If the entered digits match the PIN, then the chip 14 authenticates the phone user and allows her(him) to access a desired service, such as an identification as a subscriber to a mobile radio-communication network.

Otherwise, when the entered digits do not match the PIN, the chip 14 does not authenticate the phone user and disallows her(him) to access a desired service.

Thus, to enter data, the interaction between the user and the chip 14 is easy, intuitive, quick, convenient for the user and secure.

## Claims

1. A method (20) for entering data, data to be entered comprising at least one digit,
**characterized in that**, at least one digit being associated with no touch or a count of at least one touch, the method comprises the following steps:
- a first device (12) detects (210) a count of at least one touch that is or is not present at once or several times,
- the first or a second (14) device determines (220) the digit associated with no detected touch or a detected count of at least one touch, the second device being connected to the first device.

2. Method according to claim 1, wherein the first device comprises at least one touch sensitive interface (122).

3. Method according to claim 2, wherein the method further comprises a user authentication step in which the first or second device compares at least one user fingerprint with corresponding biometric data, the at least one user fingerprint being captured through the at least one touch sensitive interface, the biometric data being stored within the first or second device, and only if the at least one user fingerprint corresponds to biometric data, then the user is authenticated.

4. Method according to any of claims 1 to 3, wherein the method further comprises the following step in which the first or second device requests a user to enter at least one digit.

5. Method according to any of claims 2 to 4, wherein the method further includes a user information step by which the second device sends to the first device or the first device sets a predefined time period value during which a user is allowed to touch at least one touch sensitive interface.

6. Method according to any of claims 1 to 5, wherein the method further includes a user information step by which the first or second device sends a signal for indicating that the count of at least one touch or no touch has been detected.

7. Method according to any of claims 1 to 6, wherein the data to be entered comprises at least one element of a group comprising:
- a Personal Identity Number;
- a One Time Password;
- a user password;
- a passphrase.

8. Method according to any of claims 1 to 7, wherein the first device includes a mobile terminal and/or wherein the second device includes a token, such as a smart card.

9. A device (12) for entering data, data to be entered comprising at least one digit,
**characterized in that**, at least one digit being associated with no touch or a count of at least one touch, a first device is adapted to :
- detect a count of at least one touch that is or is not present at once or several times, and
- determine the digit associated with no detected touch or a detected count of at least one touch.

10. A system (10) for entering data, data to be entered comprising at least one digit,
**characterized in that** the system comprises a first device (12) and a second device (14) connected to the first device,
**in that** at least one digit being associated with no touch or a count of at least one touch, a first device is adapted to detect a count of at least one touch that is or is not present at once or several times, and
**in that** the second device is adapted to determine the digit associated with no detected touch or a detected count of at least one touch.
